# FASCICULE DE BREVET EUROPEEN

(11) **EP 0 378 633 B1**
(45) Date de publication et mention de la délivrance du brevet: **19.01.1994**
(21) Numéro de dépôt: 89907196.3
(22) Date de dépôt: 15.06.1989
(51) Int. Cl.: C01B 33/34

(54) **GRANULE DE ZEOLITES A LIANT ZEOLITIQUE**
ZEOLIT-GRANULATE MIT ZEOLIT-BINDEMITTEL
ZEOLITE GRANULES WITH ZEOLITE BINDER

(30) Priorité: 17.06.1988 FR 8808107
(43) Date de publication de la demande: 25.07.1990
(73) Titulaire: CECA S.A., 92800 Puteaux (FR)
(72) Inventeur: PLEE, Dominique, F-75017 Paris (FR)
(74) Mandataire: Haicour, Philippe
(86) Numéro de dépôt international: FR8900300
(87) Numéro de publication internationale: WO8912603

(56) Documents cités:
- DE-A- 2 524 484
- FR-A- 1 419 426
- FR-A- 2 093 833

## Description

### DOMAINE TECHNIQUE

La présente invention a trait à un nouveau procédé pour l'obtention de tamis moléculaires zéolitiques granulaires uniquement constitués de composés zéolitiques.

Les tamis moléculaires zéolitiques dont il est question ici sont des alumino-silicates cristallins de formule générale

M2/n O . Al₂O₃ . x SiO₂ , y H₂O

où M représente un cation de valence n,
où x vaut 2 dans le cas des zéolites A, et prend des valeurs comprises entre 2 et 6 s'il s'agit de zéolites X ou Y,
où y caractérise l'état d'hydratation de la zéolite, la valeur 0 correspondant aux zéolites anhydres (calcinées).
La structure cristalline de ces zéolites consiste essentiellement en un squelette tridimensionnel de tétraèdres SiO4 et AlO4 reliés entre eux par partage d'un atome d'oxygène. Dans la structure tétraédrique, le rapport du nombre d'oxygènes à la somme totale des atomes Si et Al est ainsi de 2. Une structure entièrement formée de tétraèdres SiO4 a une charge électrique nulle. Le remplacement de tétraèdres SiO4 par des tétraèdres AlO4 engendre une charge négative qui est compensée par l'inclusion de cations dans le réseau. Ces cations peuvent s'échanger avec les cations de solutions aqueuses, et les techniques d'échange basées sur cette propriété sont bien connues de l'homme de l'art.

La géométrie de l'assemblage des tétraèdres SiO4 et AlO4 est telle que la structure comporte des cavités, appelées cages, séparées par des fenêtres d'ouverture bien calibrée. A température ambiante, ces cages sont ordinairement occupées par de l'eau. Un traitement thermique approprié élimine cette eau et libère un système poreux.

De telles zéolites sont douées de remarquables propriétés d'adsorption, qui proviennent d'une part de l'importance de l'affinité quelles développent pour certains types de molécules et qui en font un agent d'adsorption de choix, notamment lorsque l'on désire atteindre de très basses pressions d'équilibre de l'adsorbat, et d'autre part d'une haute sélectivité associée à l'étroite distribution des micropores donnant accès aux cavités de la structure cristalline. Ces structures fonctionnent comme de véritables tamis moléculaires, et de là provient d'ailleurs leur nom vulgaire. Ces qualités les font souvent préférer aux agents adsorbants plus anciennement connus tels que le gel de silice, l'alumine ou le charbon actif.

Les zéolites sont habituellement obtenues sous forme de poudre fine, qu'elles proviennent de gisements naturels ou d'opérations de synthèse industrielle. Pour leur emploi comme agents d'adsorption, elles doivent être mises sous forme de billes ou de granulés par agglomération, le liant utilisé étant habituellement un minéral argileux, comme la bentonite, le kaolin ou l'attapulgite. On a également proposé comme liants l'hydroxyde d'aluminium, les sels de l'acide silicique, les sols de silice.

Le problème créé par l'agglomération tient dans l'introduction dans l'adsorbant granulaire d'un pourcentage non négligeable d'une phase qui ne contribue en rien à ses propriétés adsorbantes, et qui peut même induire des comportements néfastes dans certaines applications (par exemple, la bentonite catalyse des réactions acides, comme par exemple la polymérisation d'oléfines). Aussi a-t-on proposé de longue date l'utilisation de liants zéolitisables que l'on active après avoir réalisé l'agglomération.

### TECHNIQUE ANTERIEURE

Les méthodes les plus communes sont basées sur la possibilité de produire une zéolite A à partir de métakaolin et de soude, dans des conditions pratiquement stoechiométriques.
Ainsi, le brevet US N° 3 119 659 (Taggart et coll.) expose un procédé d'obtention de particules de tamis moléculaires par agglomération de zéolite A au moyen de kaolin et d'une solution de soude, suivie d'une calcination de l'aggloméré, puis d'une cristallisation dans une solution de soude. La méthode présente l'inconvénient d'exiger un double traitement de l'aggloméré, d'abord un traitement à haute température nécessaire pour transformer le kaolin en métakaolin qui est l'espèce réactive, puis une recristallisation dans la soude.
On a songé à remplacer, dans la préparation de l'extrudé, le kaolin par du métakaolin, comme dans les procédés décrits dans les brevets US N° 4 381 255 (Nozemack et coll.) et N° 4 381 256 (Hildebrandt), ou par un mélange de silice amorphe comme source de silice et d'aluminate de sodium comme source d'aluminium, comme dans le brevet DE 25 24484 (Grace), à faire avancer la cristallisation du produit au cours d'une phase intermédiaire de mûrissement, et à traiter l'extrudé mûri par une solution diluée et chaude de soude afin de compléter la cristallisation amorcée dans la phase précédente. On a également songé, comme dans le brevet français N° 1 419 426 (Farb. Bayer Akt.), à utiliser un sol d'acide silicique gélifié au moyen d'oxyde de magnésium, la zéolitisation du liant étant obtenue par maturation à chaud dans une solution d'aluminate de sodium.

Ces diverses méthodes ont en commun le défaut d'exiger la réalisation délicate de plusieurs étapes en série. Dans certains cas, une calcination intermédiaire est nécessaire pour que l'aggloméré ne se délite pas au cours de la phase humide suivante. Il est également indispensable de laver les extrudés après traitement pour les débarrasser de l'excès de soude ou de sels de sodium, substances qui finissent par provoquer l'encroûtage des appareils; opérations longues et difficiles, préjudiciables à l'économie du procédé.

### EXPOSE DE L'INVENTION

La présente invention, qui remédie à ces inconvénients, est un procédé pour l'obtention de zéolites, notamment de zéolites A, à liant constitué par une phase zéolitique, également de type A, et qui comprend les opérations successives suivantes:
- empâtage d'une poudre de zéolite au moyen de sol de silice et d'une solution aqueuse formée par dissolution d'alumine hydratée en présence de soude;
- mise en forme mécanique de la pâte formée par filage, par compaction ou par tout autre moyen propre à produire un aggloméré;
- mûrissement Spontané de l'aggloméré à l'ambiante;
- traitement thermique de l'aggloméré en phase sèche entre 50 et 100°C;
- calcination de l'aggloméré entre 450° et 600°C.

On utilise généralement des sols de silice titrant de 20 à 40% en poids de SiO₂, et préférentiellement des sols à 30% de SiO₂. Dans les pâtes selon l'invention, le rapport pondéral entre la silice apportée par le sol de silice et la zéolite est compris entre environ 4 et 15% (ces proportions étant exprimées sur la base du produit fini après calcination à 900°C), soit 12,5 à 60% de sol de silice à 30% par rapport à la masse calcinée). La solution d'aluminate de sodium introduit dans la pâte des quantités d'hydroxyde d'aluminium qui peuvent varier entre 0,2 g et 1,6 g de Al(OH)3, et des quantités de soude comprise entre 0,1 g et 0,9 g de NaOH par gramme de silice SiO₂ apportée par le sol de silice; valeurs que l'on comparera aux quantités stoechiométriques pour former de la zéolite A et qui sont respectivement de 1,29 g d'hydroxyde d'aluminium et de 0,66 g de soude par gramme de SiO₂. Hors des limites de composition indiquées ci-dessus, il n'est pas possible d'obtenir un tamis moléculaire exempt de liant non zéolitique possédant des propriétés d'adsorption améliorées par rapport aux agglomérés courants constitués de 80% de zéolite et 20% de liant inerte.

Pour préparer la pâte selon l'invention, on commence par malaxer à sec la poudre de zéolite avec un agent de filage tel que la carboxyméthylcellulose. On poursuit le malaxage en ajoutant le sol de silice, puis la solution sodique d'aluminate de sodium fraîchement préparée, mais ramenée à température ambiante. On ajuste la consistance de la pâte par addition d'eau en quantité convenable pour que sa teneur en eau, y compris l'eau d'hydratation de la zéolite, soit comprise entre 60 et 75% (exprimée en poids % par rapport à l'ensemble des constituants anhydres SiO₂, Al₂O₃, Na₂O et zéolite, autrement dit par rapport à la masse du granulé après calcination à 900°C). On extrude alors cette pâte pour obtenir des filés, de préférence de diamètre de 1,6 à 3,2 mm de diamètre; on peut également agglomérer la pâte en billes au moyen d'une assiette de granulation, ou encore la compacter selon les techniques bien connues de l'homme de l'art. Ces extrudés subissent un mûrissement spontané à température et humidité ambiantes dont la durée peut aller jusqu'à 24 heures, puis on les étuve entre 50 et 150°C pendant une durée comprise entre environ 30 minutes et 24 heures; enfin, on les calcine à une température d'au moins 450°C, sans toutefois dépasser 600°C pendant une durée de 30 minutes à 6 heures.

Le procédé selon l'invention présente sur les procédés connus l'avantage d'une grande simplicité et d'une grande rapidité dans les opérations de zéolitisation de liant qui peuvent toutes s'effectuer en ligne; ces opérations s'effectuent avec sécurité en phase sèche, et il n'est nul besoin de gélification préalable du sol de silice à la magnésie, ni de recristalliser dans une solution les agglomérés dans une solution basique après mise en forme, ni surtout de les laver après zéolitisation; d'autre part, en l'absence de tout excès de réactif basique, on écarte l'effet de restriction de l'ouverture des pores de la zéolite, évidemment nuisible à ses qualités d'adsorption, et du même coup, on se débarrasse des problèmes de manipulation d'agglomérés plus ou moins poisseux; on minimise également les problèmes de corrosion de l'installation.

Les tamis moléculaires granulés obtenus selon ce procédé offrent une cinétique d'adsorption, une capacité d'adsorption d'eau supérieure à 20% ,une résistance mécanique à l'écrasement égale ou supérieure à 6 10⁵ Pascals, meilleures que celle des tamis agglomérés à l'aide de liants traditionnels. Ils trouveront des utilisations avantageuses, notamment en pétrochimie, pour le conditionnement de l'air dans les automobiles, comme desséchants dans les doubles vitrages isolants.

La présente invention n'est pas limitée aux tamis moléculaires de type A. La transposition, notamment aux zéolites X et Y, est à la portée de tout homme du métier.

### MANIERES DE REALISER L'INVENTION

### Exemple 1

- On prépare 200 ml d'une solution contenant 30 grammes de soude NaOH, prise sous forme de paillettes ou de lessive, que l'on fait bouillir et on y disperse petit à petit 50 g d'alumine hydratée. Une fois que la solution claire d'aluminate de sodium est obtenue, on la complète à 200 ml, puis on la laisse refroidir à température ambiante.
- Par ailleurs, on mélange pendant 10 minutes , dans un malaxeur à meules FISCHER, 800 g de poudre de zéolite 4A (poids compté en équivalent du poids de zéolite calcinée à 900°C), 25 g de carboxyméthylcellulose et 150 g de sol de silice à 30% en poids.
- Une fois que cette pâte est obtenue, on ajoute la solution d'aluminate de sodium et 80 g d'eau sous agitation. Après 10 minutes de malaxage, la pâte est extrudée dans une presse hydraulique de type PINETTE dont le fond est constitué par une filière dont les trous ont un diamètre de 3,2 mm.
- Les extrudés sont ensuite placés dans une étuve à 100°C pendant 1 heure, puis activés à 550°C pendant 2 heures.

Leur capacité d'adsorption d'eau mesurée par équilibrage
durant 24 heures dans une enceinte en présence d'une atmosphère à 10% d'humidité relative est de 23,7%, ce qui indique une conversion en zéolite 4A importante (les agglomérés-filés ordinaires à 20% de liant adsorbent environ 19,5% d'eau dans les mêmes conditions).
Leur résistance mécanique à l'écrasement est de 7 10⁵ Pascals avec un écart-type de 0,7.

### Exemple 2

- On prépare, selon le mode opératoire de l'exemple 1, une solution d'aluminate de sodium, mais cette fois, les quantités de soude et d'alumine contenues dans cette solution sont respectivement de 20 g et 40 g.
- On mélange, dans un malaxeur à meules, 800 g de poudre de zéolite 4A (poids équivalent à la matière calcinée à 900°C) 25 g de carboxyméthylcellulose et 150 g de sol de silice à 30% en poids pendant 10 minutes.
- On introduit ensuite la solution d'aluminate refroidie et 120 ml d'eau et on poursuit le malaxage 10 minutes.
- On extrude au moyen de la presse hydraulique PINETTE avec un diamètre de filière de 3,2 mm.
- Les extrudés sont ensuite placés dans une étuve à 60°C pendant 16 heures et calcinés à 550°C pendant 2 heures. La capacité d'adsorption d'eau mesurée, dans les mêmes conditions qu'à l'exemple 1, est de 24,5% et la résistance mécanique à l'écrasement de 6,2 10⁵ Pascals avec écarttype de 1,4.

### Exemple 3

Cet exemple concerne la préparation d'extrudés de tamis sans liant en utilisant une solution d'aluminate plus concentrée en soude et en alumine que pour les exemples 1 et 2 ; de plus, la proportion entre soude et alumine est presque stoechiométrique.
- On prépare, selon le mode opératoire de l'exemple 1, une solution d'aluminate de sodium contenant 40 g de soude et 70 g d'alumine.
- On mélange, dans le malaxeur à meules, 800 g de poudre de zéolite 4A (poids équivalent à la matière calcinée à 90°C), 25 g de carboxyméthylcellulose et 150 g de sol de silice à 30% en poids pendant 10 minutes.
- On introduit ensuite la solution d'alumine et 100 ml d'eau et on poursuit le malaxage 10 minutes.
- On extrude au moyen de la presse hydraulique PINETTE avec un diamètre de 3,2 mm.
- Les extrudés sont ensuite placés dans une étuve à 100°C pendant 16 heures puis calcinés pendant 2 heures à 550°C.
   La capacité d'adsorption d'eau, mesurée dans les mêmes conditions qu'à l'exemple 1, est de 20,6% et la résistance mécanique à l'écrasement de 6,5 10⁵ Pascals avec un écarttype de 1,3.

### Exemple 4

- On prépare une solution d'aluminate de soude selon le mode opératoire de l'exemple 1. Les quantités de soude et d'alumine contenues dans cette solution sont respectivement 30 et 40 g.
- On mélange 800 g de poudre de zéolite 4A (poids équivalent à la matière calcinée à 900°C), 20 g de carboxyméthylcellulose et 300 g de sol de silice à 30% pendant 10 minutes.
- On ajoute la solution d'aluminate de sodium et on poursuit le mélange pendant 10 minutes.
- On extrude la pâte au moyen de la presse hydraulique PINETTE équipée d'une filière de 3,2 mm de diamètre. Les extrudés sont mûris à température ambiante pendant 24 heures, puis placés dans une étuve à 100°C pendant 2 heures, puis calcinés à 550°C pendant 2 heures.
   La capacité d'adsorption d'eau, mesurée selon les conditions de l'exemple 1, est de 24,5% et la résistance mécanique à l'écrasement est de 5 10⁵ Pascals avec un écart-type de 1,4.

### Exemple 5

Cet exemple diffère de l'exemple 4 en ce qu'il concerne la préparation d'extrudés de tamis sans liant à partir d'une solution d'aluminate de sodium contenant plus de soude et d'alumine.
- On prépare, selon le mode opératoire de l'exemple 1, une solution d'aluminate de sodium contenant 80 g de soude et 100 g d'alumine.
- On mélange, dans le malaxeur à meules, 800 g de poudre de zéolite 4A (poids équivalent à la matière calcinée à 900°C), 20 g de carboxyméthylcellulose et 300 g de sol de silice à 30% en poids pendant 10 minutes.
- On introduit ensuite la solution d'alumine et 100 ml d'eau et on poursuit le malaxage durant 10 minutes.
- On extrude la pâte obtenue au moyen de la presse hydraulique PINETTE équipée d'une filière de 3,2 mm de diamètre.
- On traite les filés en étuve pendant 1 heure à 100°C et on active à 550°C pendant 2 heures. La capacité d'adsorption d'eau, mesurée selon le mode opératoire de l'exemple 1, est de 19,5% et la résistance mécanique à l'écrasement est de 9 10⁵ Pascals avec un écart-type de 3.

### Exemple 6

- On prépare, selon le mode opératoire de l'exemple 1, une solution d'aluminate de sodium contenant 30 g de soude et 60 g d'alumine. Ces quantités correspondent pratiquement à la stoechiométrie entre la soude et l'alumine.
- On mélange, dans le malaxeur à meules, 800 g de poudre de zéolite 4A (poids équivalent à la matière calcinée à 900°C), 20 g de carboxyméthylcellulose et 300 g de sol de silice à 30% en poids pendant 10 minutes.
- On ajoute la solution d'aluminate de sodium et 130 ml d'eau et on poursuit le malaxage pendant 10 minutes.
- On extrude la pâte au moyen de la presse hydraulique PINETTE équipée d'une filière de 3,2 mm de diamètre. On abandonne les filés durant 2 heures à 100°C dans une étuve et on les calcine à 550°C pendant 2 heures.
   La capacité d'adsorption d'eau, mesurée selon le mode opératoire de l'exemple 1, est de 23,1% et la résistance mécanique à l'écrasement est de 6,4 10⁵ Pascals avec un écart-type de 1,7.

### Exemple 7

Cet exemple diffère du précédent par la quantité de sol de silice ajoutée dans la pâte ; on a gardé constants les rapports molaires entre l'alumine, la soude et la silice provenant du sol de silice.
- La préparation de la solution d'aluminate de sodium est identique à celle de l'exemple 1 mais cette solution contient 45 g de soude et 90 g d'alumine.
- On mélange pendant 10 minutes dans le malaxeur à meules, 800 g de poudre de zéolites 4A (poids équivalent à la matière calcinée à 900°C), 20 g de carboxyméthylcellulose et 450 g de sol de silice à 30% en poids .
- On introduit la solution d'aluminate de sodium et 100 ml d'eau et on poursuit le mélange durant 10 minutes.
- On extrude la pâte au moyen de la presse hydraulique PINETTE équipée d'une filière de 3,2 mm de diamètre.
- On cristallise les extrudés pendant 16 heures en étuve à 60°C, puis on les calcine à 550°C durant 2 heures.
   La capacité d'adsorption d'eau mesurée selon le mode opératoire de l'exemple 1, est de 22,6% et la résistance mécanique à l'écrasement est de 4 10⁵ Pascals avec un écart-type de 1,3.

## Revendications

1. Procédé d'obtention d'agglomérés de zéolites à liant zéolitisé, comprenant les opérations suivantes :
- empâtage d'une poudre de zéolite au moyen de sol de silice et d'une solution aqueuse formée par dissolution d'alumine hydratée en présence de soude ;
- mise en forme mécanique de la pâte formée ;
- mûrissement spontané de l'aggloméré à l'ambiante ;
- traitement thermique de l'aggloméré, entre 50 et 100°C ;
- calcination de l'aggloméré entre 450° et 600°C, caractérisé d'une part en ce que :
- la quantité de sol de silice utilisée est telle que la silice SiO2 apportée par le sol est comprise entre 4% et 15% en poids,
- la solution aqueuse, qui est obtenue par dissolution d'alumine hydratée en présence de soude, contient de la soude NaOH à raison de 0,1 à 0,9 g et de l'alumine hydratée à raison de 0,2 à 1,6 g par g de SiO2 contenu dans le sol de silice, et où la soude NaOH et l'alumine hydratée sont dans un rapport pondéral compris entre 0,5 et 0,8, et d'autre part en ce que :
- le mûrissement et le traitement thermique s'opèrent en phase sèche, et que
- la durée du mûrissement, qui s'effectue dans les conditions d'ambiance, n'excède pas 24 heures.

2. Agglomérés de zéolites constitués de zéolite A et d'un liant zéolitisé, obtenus selon un procédé comprenant les opérations d'empâtage d'une poudre de zéolite A au moyen de sol de silice et d'une solution aqueuse formée par dissolution d'alumine hydratée en présence de soude, de mise en forme mécanique de la pâte formée, de mûrissement spontané de l'aggloméré à l'ambiante, de traitement thermique en phase sèche de l'aggloméré entre 50 et 100°C et de calcination de l'aggloméré entre 450° et 600°C, et dont la capacité d'adsorption d'eau est supérieure à 20 %.

## Claims

1. Process for obtaining agglomerates of zeolites with a zeolitised binding, comprising the following operations:
- forming a paste from a zeolite powder by means of silica sol and from an aqueous solution formed by dissolving alumina hydrate in the presence of sodium hydroxide;
- mechanical forming of the paste formed;
- spontaneous aging of the agglomerate under ambient conditions;
- heat treatment of the agglomerate between 50 and 100°C;
- calcination of the agglomerate between 450° and 600°C, characterised, on the one hand, in that:
- the quantity of silica sol employed is such that the silica SiO₂ contributed by the sol is between 4 % and 15 % by weight,
- the aqueous solution which is obtained by dissolving alumina hydrate in the presence of sodium hydroxide contains sodium hydroxide NaOH in a proportion of 0.1 to 0.9 g and alumina hydrate in a proportion of 0.2 to 1.6 g per g of SiO₂ present in the silica sol, and where the sodium hydroxide NaOH and the alumina hydrate are in a weight ratio of between 0.5 and 0.8, and, on the other hand, in that:
- the aging and the heat treatment are performed in dry phase, and that
- the duration of the aging, which is performed under ambient conditions, does not exceed 24 hours.

2. Agglomerates of zeolites consisting of zeolite A and of the zeolitised binder, which are obtained by a process comprising the operations of forming a paste from a zeolite A powder by means of silica sol and from an aqueous solution formed by dissolving alumina hydrate in the presence of sodium hydroxide, of mechanical forming of the paste formed, of spontaneous aging of the agglomerate under ambient conditions, of heat treatment of the agglomerate in the dry phase between 50 and 100°C and of calcination of the agglomerate between 450° and 600°C, and whose water adsorption capacity is greater than 20 %.

## Patentansprüche

1. Verfahren zur Gewinnung von Zeolithagglomeraten mit zeolithischem Bindemittel, bestehend aus den folgenden Verfahrensschritten:
- Verseifen eines Zeolithpuders mit einem Siliciumdioxidsol und einer wäßrigen Lösung, hergestellt durch Auflösen von Aluminiumoxidhydrat in Gegenwart von Ätznatron;
- Eingeben des gebildeten Breies in mechanische Formen;
- Selbstalterung des Agglomerates unter Normalbedingungen;
- thermische Behandlung des Agglomerates bei Temperaturen zwischen 50 und 100°C;
- Calcinierung des Agglomerates bei Temperaturen zwischen 450 und 600°C, zum einen dadurch gekennzeichnet, daß:
- die Menge des verwendeten Siliciumdioxidsoles so beschaffen ist, daß das mit dem Sol eingetragene Siliciumdioxid SiO₂ zwischen 4 und 15 Gew.% liegt,
- die wäßrige Lösung, hergestellt durch Auflösen von Aluminiumoxidhydrat in Gegenwart von Ätznatron, Ätznatron NaOH im Verhältnis von 0,1 bis 0,9 g und Aluminiumoxidhydrat im Verhältnis von 0,2 bis 1,6 g pro g in dem SiO₂ des Siliciumdioxidsols aufweist, und worin das Ätznatron NaOH und Aluminiumoxid in einem Gewichtsverhältnis zwischen 0,5 und 0,8 stehen,
und zum anderen dadurch, daß:
- die Alterung und die thermische Behandlung in trockener Phase durchgeführt werden, und daß
- die Dauer der Alterung unter Normalbedingungen 24 Stunden nicht überschreitet.

2. Aus Zeolith A und einem zeolithischen Bindemittel aufgebaute Zeolithagglomerate, erhalten nach einem Verfahren mit den Verfahrensstufen der Verseifung eines Zeolith A-Puders mit einem Siliciumdioxidsol und einer durch Auflösen von Aluminiumoxidhydrat in Gegenwart von Ätznatron hergestellten Lösung, der Einbringung des gebildeten Breies in mechanische Formen, der Selbstalterung des Agglomerates unter Normalbedingungen, der thermischen Behandlung des Agglomerates bei Temperaturen zwischen 50 und 100°C in trockener Phase und der Calcinierung des Agglomerats bei Temperaturen zwischen 450 und 600°C, und deren Wasseraufnahmevermögen größer als 20% ist.
